# EUROPÄISCHE PATENTANMELDUNG

(11) **EP 3 819 169 A1**
(43) Veröffentlichungstag der Anmeldung: **12.05.2021**
(21) Anmeldenummer: 19207923.4
(22) Anmeldetag: 08.11.2019
(51) Int. Cl.: B60R 1/00, B60N 2/90, B60R 11/02, B60R 21/02

(54) **KRAFTFAHRZEUG MIT FAHRGASTZELLEN**

(71) Anmelder: MAGNA STEYR Fahrzeugtechnik AG & Co KG, 8041 Graz (AT)
(72) Erfinder: PLANKA, Franz, 9433 St. Andrä (AT); ZACHNEGGER, Harald, 8041 Graz (AT)
(74) Vertreter: Zangger, Bernd

(57) **Zusammenfassung**

Ein Kraftfahrzeug, umfassend zumindest zwei Fahrgastzellen (2, 4) mit jeweils zumindest einem Passagierplatz (3), nämlich eine Ausgangs-Fahrgastzelle (2) und eine Nachbar-Fahrgastzelle (4), wobei von der Ausgangs-Fahrgastzelle (2) aus gesehen, die Nachbar-Fahrgastzelle (4) in einer ersten Richtung (a) liegt, wobei zwischen der Ausgangs-Fahrgastzelle (2) und der Nachbar-Fahrgastzelle (4) eine Trennwand (5) etwa normal auf die erste Richtung (a) angeordnet ist, wobei an der Trennwand (5) auf der der Ausgangs-Fahrgastzelle (2) zugewandten Seite ein Videodisplay (6) angeordnet ist, wobei das Kraftfahrzeug zumindest eine Videokamera (1) umfasst, wobei die Videokamera (1) ein Bild des Umfeldes des Kraftfahrzeuges, etwa in der ersten Richtung (a) gesehen, einfängt, wobei die Videokamera (1) und das Videodisplay (6) derart verbunden sind, dass das Bild der Videokamera (1) auf dem Videodisplay (6) einspielbar ist.

## Beschreibung

### Gebiet der Erfindung

Die vorliegende Erfindung betrifft ein Kraftfahrzeug umfassend zumindest zwei Fahrgastzellen, mit jeweils zumindest einem Passagierplatz.

### Stand der Technik

Kraftfahrzeuge mit Fahrgastzellen, die jeweils zumindest einen Passagierplatz aufweisen, sind an sich bekannt. Aus verschiedenen Gründen, beispielsweise zur Trennung verschiedener funktionaler Bereiche, wie zur Trennung von Laderäumen gegenüber Passagierräumen, werden Trennwände in Kraftfahrzeugen eingesetzt. Beispielsweise zur Erhöhung der Privatheit in einem Kraftfahrzeug für den Personentransport, können Trennwände auch zwischen verschiedenen Sitzbereichen für Passagiere eingerichtet sein, um Kabinen bzw. Fahrgastzellen zu bilden.

Je stärker ein Sitzbereich, beispielsweise ein einzelner Passagiersitz, durch Trennwände von anderen Sitzbereichen getrennt ist, desto höher ist zwar der Eindruck der Privatheit in diesem Sitzbereich, desto eingeschränkter ist jedoch üblicherweise auch die Sicht der Passagiere in dem Sitzbereich durch die vorhandene Trennwand oder Trennwände. Gerade für Kraftfahrzeuge die mehrere Kabinen, insbesondere Einzelkabinen, und somit mehrere Fahrgastzellen aufweisen, kann es für Passagiere des Kraftfahrzeugs unangenehm sein, beispielsweise nur ein Fenster oder gar keines für eine Sicht nach draußen zu haben und an den übrigen Seiten nur Wände zu sehen. Dies kann als eintönig und langweilig wahrgenommen werden oder beispielsweise bei empfindlichen Personen auch zu klaustrophobischen Anfällen führen.

### Zusammenfassung der Erfindung

Es ist eine Aufgabe der Erfindung, ein Kraftfahrzeug, umfassend zumindest zwei Fahrgastzellen, in dieser Hinsicht zu verbessern und insbesondere ein Kraftfahrzeug anzugeben, das eine hohe Privatheit für Passagiere ermöglicht, wobei jedoch der Fahrkomfort für die Passagiere erhalten bleibt.

Die Lösung der Aufgabe erfolgt durch ein Kraftfahrzeug, umfassend zumindest zwei Fahrgastzellen mit jeweils zumindest einem Passagierplatz, nämlich eine Ausgangs-Fahrgastzelle und eine Nachbar-Fahrgastzelle, wobei von der Ausgangs-Fahrgastzelle aus gesehen, die Nachbar-Fahrgastzelle in einer ersten Richtung liegt, wobei zwischen der Ausgangs-Fahrgastzelle und der Nachbar-Fahrgastzelle eine Trennwand etwa normal auf die erste Richtung angeordnet ist, wobei an der Trennwand auf der der Ausgangs-Fahrgastzelle zugewandten Seite ein Videodisplay angeordnet ist, wobei das Kraftfahrzeug zumindest eine Videokamera umfasst, wobei die Videokamera ein Bild des Umfeldes des Kraftfahrzeuges, etwa in der ersten Richtung gesehen, einfängt, wobei die Videokamera und das Videodisplay derart verbunden sind, dass das Bild der Videokamera auf dem Videodisplay einspielbar ist.

Erfindungsgemäß weist ein Kraftfahrzeug, insbesondere ein Personenbeförderungsfahrzeug, zumindest eine Trennwand auf, die eine erste Fahrgastzelle, die sogenannte "Ausgangs-Fahrgastzelle", von einer zweiten Fahrgastzelle, der sogenannten "Nachbar-Fahrgastzelle" trennt. In Richtung zu dieser Trennwand hin, also in der ersten Richtung, sieht ein Passagier auch dann nicht oder nicht ausreichend die Außenwelt des Kraftfahrzeugs, wenn in dieser Richtung nach der Nachbar-Fahrgastzelle ein Fenster, beispielsweise eine Windschutzscheibe oder ein Seitenfenster des Kraftfahrzeugs, angeordnet ist, da die Sicht des Passagiers in dieser ersten Richtung, zumindest bereichsweise, von der Trennwand verdeckt ist.

Um dem Passagier in dieser Fahrgastzelle, der Ausgangs-Fahrgastzelle, eine bessere Aussicht zu ermöglichen und den Eindruck zu geben, sich an einer Fahrzeug-Außenwand zu befinden, ist auf der Trennwand ein Videodisplay angeordnet und kann für den Passagier auf diesem Videodisplay das gerade nicht sichtbare Umfeld des Kraftfahrzeugs in dieser Richtung, nämlich der ersten Richtung, dargestellt werden, und somit der Eindruck vermittelt werden, er könne nach draußen sehen. Dargestellt wird daher das Umfeld außerhalb des Fahrzeuges - der in der Fahrgastzelle reisende Passagier nimmt bevorzugt die anderen Passagiere, insbesondere in anderen Fahrgastzellen reisende Passgiere, nicht wahr.

Bevorzugt werden dem Passagier bzw. den Passagieren in der Ausgangs-Fahrgastzelle an mehreren, insbesondere an allen Seiten an welchen nicht ohnehin Fenster zur Sicht nach draußen vorhanden sind, derartige Videodisplays an Trennwänden zur Verfügung gestellt, um jeweils das Umfeld außerhalb des Fahrzeuges in Richtung der Trennwand darzustellen und somit dem Passagier bzw. den Passagieren in der Ausgangs-Fahrgastzelle jeweils den Eindruck zu vermitteln, nach allen diesen Seiten nach draußen sehen zu können. Der Passagier kann dadurch insbesondere den Eindruck bekommen allein in dem Kraftfahrzeug zu sitzen bzw. in einem Individual-Fahrzeug zu sitzen.

Die erste Richtung ist bevorzugt in Fahrzeuglängsrichtung und in üblicher Fahrtrichtung des Kraftfahrzeuges nach vorne gerichtet. Hierdurch kann ein freier Blick nach vorne simuliert werden.

Alternativ oder zusätzlich kann die erste Richtung in Fahrzeugquerrichtung und in üblicher Fahrtrichtung des Kraftfahrzeuges seitlich nach links und/oder nach rechts gerichtet sein. Es können somit alternativ oder zusätzlich auch freie Blicke auf die Seite, nach links oder nach rechts, für die Passagiere dargestellt werden.

Bevorzugt umfasst das Kraftfahrzeug zumindest zwei Nachbar-Fahrgastzellen, wobei von der Ausgangs-Fahrgastzelle aus gesehen, eine der beiden Nachbar-Fahrgastzellen in der ersten Richtung liegt und zumindest eine weitere Nachbar-Fahrgastzelle in einer zweiten Richtung liegt, wobei die zweite Richtung normal auf die erste Richtung steht oder der ersten Richtung entgegengesetzt ist, wobei jeweils zwischen der Ausgangs-Fahrgastzelle und jeder der Nachbar-Fahrgastzellen eine Trennwand etwa normal auf die entsprechende erste oder zweite Richtung angeordnet ist, wobei an den Trennwänden auf den der Ausgangs-Fahrgastzelle zugewandten Seiten jeweils ein Videodisplay angeordnet ist, wobei das Kraftfahrzeug zumindest zwei Videokameras umfasst, wobei jeweils eine Videokamera ein Bild des Umfeldes des Kraftfahrzeuges, etwa in der ersten Richtung gesehen bzw. etwa in der zweiten Richtung gesehen, einfängt, wobei die jeweilige Videokamera und das jeweilige Videodisplay derart verbunden sind, dass das Bild der entsprechenden Videokamera auf dem entsprechenden Videodisplay einspielbar ist. Die Ausgangs-Fahrgastzellen kann also auf zumindest zwei Richtungen, beispielsweise nach vorne, nach hinten, nach links und/oder nach rechts, von sichtbehindernden weiteren Fahrgastzellen und von Trennwänden umgeben sein. In jeder dieser Richtungen kann ein Videodisplay an einer Trennwand angeordnet sein, um das entsprechende Außenbild für einen Passagier in der Ausgangs-Fahrgastzelle widerzugeben.

Alternativ oder zusätzlich können zwei verschiedene Raumrichtungen auch durch eine einzige Videokamera erfasst werden. Das Kraftfahrzeug umfasst in diesem Fall zumindest zwei Nachbar-Fahrgastzellen, wobei von der Ausgangs-Fahrgastzelle aus gesehen, eine der beiden Nachbar-Fahrgastzellen in der ersten Richtung liegt und zumindest eine weitere Nachbar-Fahrgastzelle in einer zweiten Richtung liegt, wobei die zweite Richtung von der ersten Richtung verschieden ist, wobei jeweils zwischen der Ausgangs-Fahrgastzelle und jeder der Nachbar-Fahrgastzellen eine Trennwand etwa normal auf die entsprechende erste oder zweite Richtung angeordnet ist, wobei an den Trennwänden auf den der Ausgangs-Fahrgastzelle zugewandten Seiten jeweils ein Videodisplay angeordnet ist, wobei das Kraftfahrzeug zumindest eine Videokamera umfasst, wobei die Videokamera ein Bild des Umfeldes des Kraftfahrzeuges einfängt, dass einen ersten Bildausschnitt etwa in der ersten Richtung gesehen umfasst und einen zweiten Bildausschnitt etwa in der zweiten Richtung gesehen umfasst, wobei die Videokamera und die Videodisplays derart verbunden sind, dass der entsprechende erste oder zweite Bildausschnitt des Bildes der Videokamera auf dem entsprechenden Videodisplay einspielbar ist.

Bevorzugt umfasst das Kraftfahrzeug mehrere Ausgangs-Fahrgastzellen, so dass von jeder Ausgangs-Fahrgastzelle aus gesehen, zumindest eine Nachbar-Fahrgastzelle in einer ersten Richtung oder in einer zweiten Richtung liegt, wobei die zweite Richtung normal auf die erste Richtung steht oder der ersten Richtung entgegengesetzt ist, wobei zwischen jeder Ausgangs-Fahrgastzelle und der jeweiligen Nachbar-Fahrgastzelle eine Trennwand etwa normal auf die jeweilige erste oder zweite Richtung angeordnet ist, wobei an der Trennwand auf der der jeweiligen Ausgangs-Fahrgastzelle zugewandten Seite ein Videodisplay angeordnet ist, wobei die Videokamera ein Bild des Umfeldes des Kraftfahrzeuges, etwa in der jeweiligen ersten oder zweiten Richtung gesehen, einfängt, wobei die Videokamera und das Videodisplay derart verbunden sind, dass das Bild der Videokamera auf dem Videodisplay einspielbar ist.

Vorzugsweise ist zumindest eine Nachbar-Fahrgastzelle zugleich eine Ausgangs-Fahrgastzelle, besonders bevorzugt auch umgekehrt. Eine Fahrgastzelle kann sowohl die Rolle einer Ausgangs-Fahrgastzelle als auch die Rolle einer Nachbar-Fahrgastzelle einnehmen. Daher kann eine Nachbar-Fahrgastzelle zugleich eine Ausgangs-Fahrgastzelle darstellen und/oder kann eine Ausgangs-Fahrgastzelle zugleich eine Nachbar-Fahrgastzelle darstellen.

Vorzugsweise ist in der Ausgangs-Fahrgastzelle an einer Begrenzungswand der Ausgangs-Fahrgastzelle, welche eine Außenwand des Kraftfahrzeugs bildet, ein Fenster angeordnet. An mindestens einer weiteren Begrenzungswand, bevorzugt an zumindest zwei oder drei oder allen Begrenzungswänden, der Ausgangs-Fahrgastzelle, ist eine Trennwand mit Videodisplay angeordnet. Die Fahrgastzelle kann somit ein übliches Fenster aufweisen, dass einen normalen Blick nach draußen ermöglicht, an weiteren Wänden jedoch ein Videodisplay anstatt eines Fensters aufweisen.

Bevorzugt weist eine Fahrgastzelle, insbesondere eine Ausgangs-Fahrgastzelle, besonders bevorzugt weisen alle Ausgangs-Fahrgastzellen, eine Zutrittstür für den Zugang in die Fahrgastzelle von außerhalb des Kraftfahrzeuges auf.

Das Videodisplay ist bevorzugt dazu ausgebildet, außer dem Bild der Videokamera andere Inhalte darzustellen, insbesondere Inhalte von einem mit dem Videodisplay verbunden Computer und/oder Inhalte aus dem Internet. Ein Passagier in einer Ausgangs-Fahrgastzelle kann dann vorzugsweise auswählen ob er eine Standard-Sicht nach außen auf einem Display sehen möchte, oder beispielsweise Anwendungen zur Unterhaltung oder zur Erledigung von Arbeiten abrufen möchte.

Die Trennwand kann ganz oder teilweise vertikal absenkbar sein, so dass eine Fahrgastzelle auch wahlweise mit einer anderen Fahrgastzelle stärker verbunden werden kann. In diesem Fall werden bevorzugt die für die Passagiere der zuvor getrennten Kabinen nun sichtbaren und in einer Raumrichtung nebeneinander angeordneten Videodisplays so gesteuert, dass sie nicht mehr jedes für sich ein separates Außen-Bild der jeweiligen Raumrichtung anzeigen, sondern jedes nur mehr einen Teil bzw. beide zusammen erst das vollständige Außen-Bild dieser Raumrichtung anzeigen.

Bevorzugt erstreckt sich die Trennwand bzw. eine der Trennwände des Kraftfahrzeuges entlang der Fahrzeuglängsachse in der Mitte des Kraftfahrzeugs.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Kraftfahrzeugs umfassend sechs Fahrgastzellen.
- Fig. 2: ist eine dreidimensionale Darstellung eines erfindungsgemäßen Kraftfahrzeugs umfassend fünf Fahrgastzellen und die Umgebung des Kraftfahrzeugs.

### Detaillierte Beschreibung der Erfindung

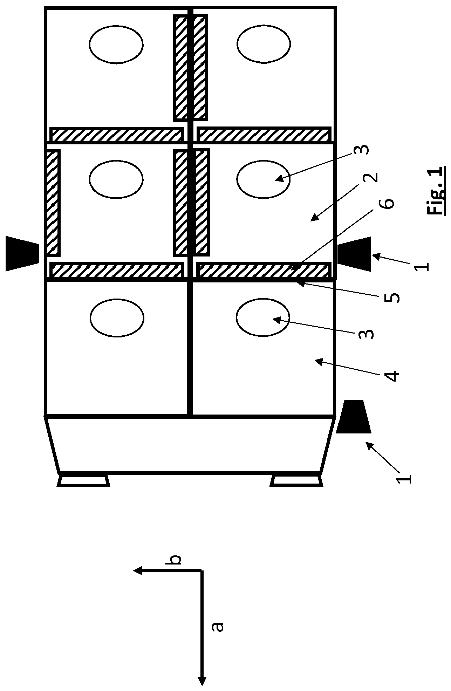

In Fig. 1 ist ein erfindungsgemäßes Kraftfahrzeug mit sechs Fahrgastzellen schematisch dargestellt.

Das Kraftfahrzeug umfasst sechs Fahrgastzellen 2, 4 mit jeweils zumindest einem Passagierplatz 3, darunter vier Ausgangs-Fahrgastzellen 2 mit Videodisplays 6 und sechs Nachbar-Fahrgastzellen 4.

Beispielsweise von der Ausgangs-Fahrgastzelle 2, die in der Mitte der Fahrzeuglängsrichtung am unteren Bildrand in Fig. 1 dargestellt ist und die mit dem Bezugszeichen "2" versehen ist, aus gesehen, liegt die Nachbar-Fahrgastzelle 4, die in Fig. 1 auch mit dem Bezugszeichen "4" versehen ist, in üblicher Fahrtrichtung des Kraftfahrzeugs vor der Ausgangs-Fahrgastzelle 2 in der ersten Richtung a, die durch einen Pfeil dargestellt ist.

Zwischen der Ausgangs-Fahrgastzelle 2 und der Nachbar-Fahrgastzelle 4 liegt eine Trennwand 5, die etwa normal auf die erste Richtung a angeordnet ist. An der Trennwand 5 ist auf der der Ausgangs-Fahrgastzelle 2 zugewandten Seite ein Videodisplay 6 angeordnet.

Das Kraftfahrzeug umfasst mehrere Videokameras 1 zum Erfassen des Umfeldes des Kraftfahrzeuges, wobei zumindest eine Videokamera 1 etwa in die erste Richtung a gerichtet ist. Diese Videokamera 1 und das Videodisplay 6 sind derart verbunden, dass das Bild der Videokamera 1 auf dem Videodisplay 6 einspielbar ist. Ein Passagier auf dem Passagierplatz 3 der Ausgangs-Fahrgastzelle 2 sieht daher bei einem Blick nach vorne auf dem Display 6 etwa das selbe Bild bzw. Umfeld des Fahrzeuges, das er sehen würde, wenn die Nachbar-Fahrgastzelle 4 zusammen mit der Trennwand 5 zwischen diesen beiden Fahrgastzellen 2, 4 nicht die Sicht verstellen würde bzw. wenn die Nachbar-Fahrgastzelle eigentlich gar nicht vorhanden wäre.

Analog zu dieser Ausgangs-Fahrgastzelle 2 (unten in der Mitte) sind in mehreren Fahrgastzellen 2 des Kraftfahrzeugs Videodisplays 6 angeordnet, die jeweils das Bild von Videokameras 1, und somit das jeweilige Umfeld des Fahrzeuges, widergeben können, dass durch die hinter den Videodisplays befindlichen Trennwände 5 und Nachbar-Fahrgastzellen 4 verdeckt wird. Das Kraftfahrzeug weist daher mehrere Ausgangs-Fahrgastzellen 2 und mehrere Nachbar-Fahrgastzellen 4 auf. Dabei haben alle Ausgangs-Fahrgastzellen 2 gleichzeitig die Rolle einer Nachbar-Fahrgastzelle 4 für eine andere Fahrgastzelle.

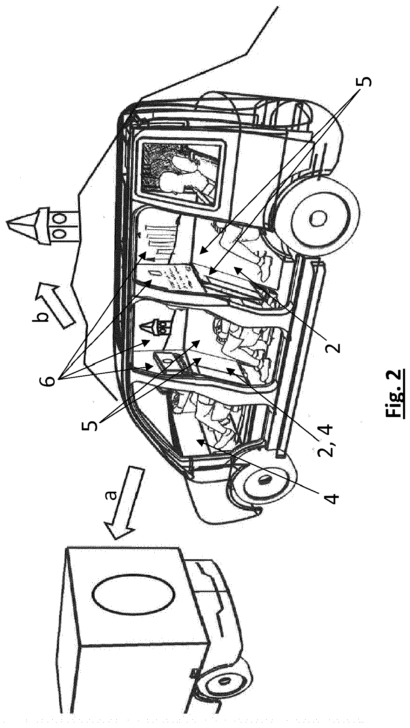

In Fig. 2 ist ein derartiges, erfindungsgemäßes Kraftfahrzeug dreidimensional dargestellt.

Die erste Sitzreihe dient beispielsweise als Sitze für Fahrer und eventuell für einen Beifahrer. Diese Sitze der vorderen Sitzreihe sind beispielsweise nicht mit Videodisplays 6 ausgestattet und bilden daher keine Ausgangs-Fahrgastzelle 2. Alternativ kann das Kraftfahrzeug beispielsweise für autonomes Fahren ausgebildet sein und auch die erste Sitzreihe beispielsweise eine oder zwei Ausgangs-Fahrgastzellen 2 bilden.

In der zweiten und dritten Sitzreihe ist das Kraftfahrzeug durch eine Trennwand 5 entlang der Fahrzeuglängsmittelachse abgeteilt, so dass vier Fahrgastzellen gebildet werden, die jeweils sowohl eine Ausgangs-Fahrgastzelle 2 sowie auch eine Nachbar-Fahrgastzelle 4 bilden. Jede dieser Fahrgastzellen ist durch eine eigene Zugangstür getrennt von außen begehbar. Videodisplays 6 sind beispielsweise vorne und an den Seiten, links und rechts, von Passagieren in diesen vier Fahrgastzellen 2 angeordnet. Auf den Bildschirmen kann das Bild von außen dargestellt sein, je nach Wunsch des Passagiers kann beispielsweise auf den Videodisplays 6 auch ein Unterhaltungsprogramm gezeigt werden, eine Zeitung gelesen werden, oder an einer Arbeit, wie an einer Präsentation, gearbeitet werden.

### Bezugszeichenliste

- 1: Videokamera
- 2: Ausgangs-Fahrgastzelle
- 3: Passagierplatz
- 4: Nachbar-Fahrgastzelle
- 5: Trennwand
- 6: Videodisplay

- a: erste Richtung
- b: zweite Richtung

## Patentansprüche

1. Kraftfahrzeug, umfassend zumindest zwei Fahrgastzellen (2, 4) mit jeweils zumindest einem Passagierplatz (3), nämlich eine Ausgangs-Fahrgastzelle (2) und eine Nachbar-Fahrgastzelle (4), wobei von der Ausgangs-Fahrgastzelle (2) aus gesehen, die Nachbar-Fahrgastzelle (4) in einer ersten Richtung (a) liegt, wobei zwischen der Ausgangs-Fahrgastzelle (2) und der Nachbar-Fahrgastzelle (4) eine Trennwand (5) etwa normal auf die erste Richtung (a) angeordnet ist, wobei an der Trennwand (5) auf der der Ausgangs-Fahrgastzelle (2) zugewandten Seite ein Videodisplay (6) angeordnet ist, wobei das Kraftfahrzeug zumindest eine Videokamera (1) umfasst, wobei die Videokamera (1) ein Bild des Umfeldes des Kraftfahrzeuges, etwa in der ersten Richtung (a) gesehen, einfängt, wobei die Videokamera (1) und das Videodisplay (6) derart verbunden sind, dass das Bild der Videokamera (1) auf dem Videodisplay (6) einspielbar ist.

2. Kraftfahrzeug nach Anspruch 1,
**dadurch gekennzeichnet, dass** die erste Richtung (a) in Fahrzeuglängsrichtung und in üblicher Fahrtrichtung des Kraftfahrzeuges nach vorne gerichtet ist.

3. Kraftfahrzeug nach Anspruch 1,
**dadurch gekennzeichnet, dass** die erste Richtung (a) in Fahrzeugquerrichtung und in üblicher Fahrtrichtung des Kraftfahrzeuges seitlich nach links oder nach rechts gerichtet ist.

4. Kraftfahrzeug nach zumindest einem der vorhergehenden Ansprüche,
**dadurch gekennzeichnet, dass** das Kraftfahrzeug zumindest zwei Nachbar-Fahrgastzellen (4) umfasst, wobei von der Ausgangs-Fahrgastzelle (2) aus gesehen, eine der beiden Nachbar-Fahrgastzellen (4) in der ersten Richtung (a) liegt und zumindest eine weitere Nachbar-Fahrgastzelle in einer zweiten Richtung (b) liegt, wobei die zweite Richtung (b) normal auf die erste Richtung (a) steht oder der ersten Richtung (a) entgegengesetzt ist, wobei jeweils zwischen der Ausgangs-Fahrgastzelle (2) und jeder der Nachbar-Fahrgastzellen (4) eine Trennwand (5) etwa normal auf die entsprechende erste oder zweite Richtung (a, b) angeordnet ist, wobei an den Trennwänden (5) auf den der Ausgangs-Fahrgastzelle (2) zugewandten Seiten jeweils ein Videodisplay (6) angeordnet ist, wobei das Kraftfahrzeug zumindest zwei Videokameras (1) umfasst, wobei jeweils eine Videokamera (1) ein Bild des Umfeldes des Kraftfahrzeuges etwa in der ersten Richtung (a) gesehen bzw. etwa in der zweiten Richtung (b) gesehen einfängt, wobei die jeweilige Videokamera (1) und das jeweilige Videodisplay (6) derart verbunden sind, dass das Bild der entsprechenden Videokamera (1) auf dem entsprechenden Videodisplay (6) einspielbar ist.

5. Kraftfahrzeug nach zumindest einem der vorhergehenden Ansprüche,
**dadurch gekennzeichnet, dass** das Kraftfahrzeug mehrere Ausgangs-Fahrgastzellen (2) umfasst, so dass von jeder Ausgangs-Fahrgastzelle (2) aus gesehen, zumindest eine Nachbar-Fahrgastzelle (4) in der ersten Richtung (a) oder in einer zweiten Richtung (b) liegt, wobei die zweite Richtung (b) normal auf die erste Richtung (a) steht oder der ersten Richtung (a) entgegengesetzt ist, wobei zwischen jeder Ausgangs-Fahrgastzelle (2) und der jeweiligen Nachbar-Fahrgastzelle (4) eine Trennwand (5) etwa normal auf die jeweilige erste oder zweite Richtung (a, b) angeordnet ist, wobei an der Trennwand (5) auf der, der jeweiligen Ausgangs-Fahrgastzelle (2) zugewandten Seite, ein Videodisplay (6) angeordnet ist, wobei die Videokamera (1) ein Bild des Umfeldes des Kraftfahrzeuges, etwa in der jeweiligen ersten oder zweiten Richtung (a, b) gesehen, einfängt, wobei die Videokamera (1) und das Videodisplay (6) derart verbunden sind, dass das Bild der Videokamera (1) auf dem Videodisplay (6) einspielbar ist.

6. Kraftfahrzeug nach zumindest einem der vorhergehenden Ansprüche,
**dadurch gekennzeichnet, dass** die Nachbar-Fahrgastzelle (4) zugleich eine Ausgangs-Fahrgastzelle (2) darstellt und/oder dass die Ausgangs-Fahrgastzelle (4) zugleich eine Nachbar-Fahrgastzelle (2) darstellt.

7. Kraftfahrzeug nach zumindest einem der vorhergehenden Ansprüche,
**dadurch gekennzeichnet, dass** in der Ausgangs-Fahrgastzelle (2), an einer Begrenzungswand der Ausgangs-Fahrgastzelle (2) welche eine Außenwand des Kraftfahrzeugs bildet, ein Fenster angeordnet ist.

8. Kraftfahrzeug nach zumindest einem der vorhergehenden Ansprüche,
**dadurch gekennzeichnet, dass** das Videodisplay (6) dazu ausgebildet ist, außer dem Bild der Videokamera (1) andere Inhalte darzustellen, insbesondere Inhalte von einem mit dem Videodisplay (6) verbunden Computer und/oder Inhalte aus dem Internet.

9. Kraftfahrzeug nach zumindest einem der vorhergehenden Ansprüche,
**dadurch gekennzeichnet, dass** die Trennwand (5) vertikal absenkbar ist.

10. Kraftfahrzeug nach zumindest einem der vorhergehenden Ansprüche,
**dadurch gekennzeichnet, dass** sich die Trennwand (5) entlang der Fahrzeuglängsachse in der Mitte des Kraftfahrzeugs erstreckt.

11. Kraftfahrzeug nach zumindest einem der vorhergehenden Ansprüche,
**dadurch gekennzeichnet, dass** die Ausgangs-Fahrgastzelle (2), oder jede Ausgangs-Fahrgastzelle (2), eine eigene Zutrittstür für den Zugang in die Ausgangs-Fahrgastzelle (2) von außerhalb des Kraftfahrzeuges aufweist.

12. Kraftfahrzeug nach zumindest einem der vorhergehenden Ansprüche,
**dadurch gekennzeichnet, dass** das Kraftfahrzeug zumindest zwei Nachbar-Fahrgastzellen (4) umfasst, wobei von der Ausgangs-Fahrgastzelle (2) aus gesehen, eine der beiden Nachbar-Fahrgastzellen (4) in der ersten Richtung (a) liegt und zumindest eine weitere Nachbar-Fahrgastzelle in einer zweiten Richtung (b) liegt, wobei die zweite Richtung (b) von der ersten Richtung (a) verschieden ist, wobei jeweils zwischen der Ausgangs-Fahrgastzelle (2) und jeder der Nachbar-Fahrgastzellen (4) eine Trennwand (5) etwa normal auf die entsprechende erste oder zweite Richtung (a, b) angeordnet ist, wobei an den Trennwänden (5) auf den der Ausgangs-Fahrgastzelle (2) zugewandten Seiten jeweils ein Videodisplay (6) angeordnet ist, wobei das Kraftfahrzeug zumindest eine Videokamera (1) umfasst, wobei die Videokamera (1) ein Bild des Umfeldes des Kraftfahrzeuges einfängt, dass einen ersten Bildausschnitt etwa in der ersten Richtung (a) gesehen umfasst und einen zweiten Bildausschnitt etwa in der zweiten Richtung (b) gesehen umfasst, wobei die Videokamera (1) und die Videodisplays (6) derart verbunden sind, dass der entsprechende erste oder zweite Bildausschnitt des Bildes der Videokamera (1) auf dem entsprechenden Videodisplay (6) einspielbar ist.
